# EUROPÄISCHE PATENTSCHRIFT

(11) **EP 0 803 711 B1**
(45) Veröffentlichungstag und Bekanntmachung des Hinweises auf die Patenterteilung: **14.06.2000**
(21) Anmeldenummer: 96118004.9
(22) Anmeldetag: 09.11.1996
(51) Int. Cl.: G01D 11/28, B60Q 3/04, G12B 11/00

(54) **Beleuchtung für eine Anzeige**
Illuminated display
Dispositif d'affichage éclairé

(30) Priorität: 12.09.1996 DE 19637087; 24.04.1996 DE 19616280
(43) Veröffentlichungstag der Anmeldung: 29.10.1997
(73) Patentinhaber: Mannesmann VDO AG, 60326 Frankfurt (DE)
(72) Erfinder: Noll, Heinrich, Dr., 64823 Gross-Umstadt (DE)
(74) Vertreter: Klein, Thomas, Dipl.-Ing.

(56) Entgegenhaltungen:
- EP-A- 0 351 259
- EP-A- 0 692 406
- WO-A-84/04382
- DE-A- 4 311 018
- PATENT ABSTRACTS OF JAPAN vol. 96, no. 5, 31.Mai 1996 & JP 08 007614 A (NICHIA CHEM IND LTD), 12.Januar 1996,
- PATENT ABSTRACTS OF JAPAN vol. 7, no. 13 (E-153), 19.Januar 1983 & JP 57 169282 A (MITSUBISHI DENKI KK)
- PATENT ABSTRACTS OF JAPAN vol. 96, no. 7, 31.Juli 1996 & JP 08 064860 A (MITSUBISHI MATERIALS CORP), 8.März 1996,

## Beschreibung

Die Erfindung bezieht sich auf eine Beleuchtung einer Anzeige und/oder eines Anzeigenteils in einer Beleuchtungsfarbe mit einer durch eine Lichtquelle anderer Farbe als der Beleuchtungsfarbe durchleuchtbaren Anzeige und/oder Anzeigenteil, wobei die Lichtquelle auf der einem Beobachter abgewandten Seite der Anzeige und/oder des Anzeigenteils angeordnet ist und zwischen Lichtquelle und Anzeige und/oder Anzeigenteil ein Fluoreszenzfilter angeordnet ist, welcher einen Teil des Lichts der Lichtquelle absorbiert und bei einer höheren Wellenlänge emittiert.

Bei derartigen Beleuchtungen ist es bekannt mittels Mischung der Lichtfarben der Lichtquelle und des Farbfilters die Beleuchtungsfarbe zu erzeugen, in der die Anzeige bzw. das Anzeigenteil erscheinen soll.

Um exakt die gewünschte Mischfarbe zu erhalten ist ein aufwendiger Abgleich z. B. der Ansteuerströme der Lichtquelle erforderlich. Darüber hinaus führt der Farbfilter zu einem wesentlichen Verlust der Leuchtstärke.

Eine eingangs genannte Beleuchtung ist aus EP 0 692 406 A1 bekannt. Dabei wird die Lichtquelle von einem elektrolumineszierenden Lampenfeld gebildet, über dem zumindest in Teilbereichen ein Filterbereich angeordnet ist. Hierbei handelt es sich um eine aufwendige, zahlreiche Fertigungsschritte erfordernde Vorrichtung.

Eine blattförmige Lichtquelle mit einer LED zur Verwendung als Hintergrundbeleuchtung offenbart JP 8-7614 A. Diese Anordnung ist sehr aufwendig und beansprucht einen großen Bauraum. Außerdem sind die Lichtverluste aufgrund zahlreicher Reflektionen des von der Leuchtdiode abgestrahlten Lichts in einer hier vorgesehenen lichtleitenden Platte, an einem reflektierenden Film sowie an einer streuenden Schicht sehr hoch.

Darüber hinaus zeigt US 4,780,752 ein Leuchthalbleiterbauteil mit hinzugefügten Teilchen, die Filter- und Streueigenschaften aufweisen. Die Streuung sowie der mit einer steilen Flanke wirkende Filter vermindern die Lichtintensität dabei erheblich.

Ferner geht aus DE 37 19 338 A1 eine Leuchtdioden-Anzeigevorrichtung mit einem in einem zylindrischen Hohlraum eines Reflektors angebrachten und in eine halbkugelförmige Abdeckung bildendem Epoxiharz gekapselten Halbleiterchip hervor.

Aufgabe der Erfindung ist es daher, eine Beleuchtung der eingangs genannten Art zu schaffen, durch die mit geringem Aufwand eine exakt bestimmbare Beleuchtungsfarbe ohne Verluste oder sogar mit einer Erhöhung der Leuchtstärke erzielt ist.

Diese Aufgabe wird erfindungsgemäß gelöst durch die Merkmale des kennzeichnenden Teils des Anspruchs 1. Durch Mischung des ungefilterten Lichtanteils mit dem gefilterten Lichtanteil wird auf einfache Weise die Beleuchtungsfarbe erreicht.

Ist der Farbfilter ein den gefilterten Lichtanteil emittierender Filter, insbesondere ein Fluoreszenzfilter, durch den der gefilterte Lichtanteil emittierbar ist, so ist ein Leuchtstärkeverlust besonders gering.

Um unter Verwendung nur einer einzigen farbigen Lichtquelle die Beleuchtungsfarbe weiß zu erhalten, können in der Normfarbtafel die Farborte der Farbe der Lichtquelle und der Farbe des gefilterten Lichtanteils auf entgegengesetzten Seiten zum Unbuntpunkt auf einer etwa geradlinigen, den Unbuntbereich schneidenden Verbindung liegen.

Dabei kann auf kostengünstige Weise die Lichtquelle eine Leuchtdiode (LED) sein.

Ist die Lichtquelle eine SMD-Leuchtdiode, so wird diese in einem Arbeitsgang mit den weiteren elektrischen bzw. elektronischen Bauteilen auf einer Leiterplatte anordenbar und kontaktierbar.

Eine Verringerung der Bauteile und damit des erforderlichen Bauraums wird dadurch erreicht, daß die Leuchtdiode ein in einem Gehäuse angeordneter LED-Chip ist, wobei der LED-Chip zur Beobachterseite hin von einem den Farbfilter bildenden farbig transparenten oder farbig durchscheinenden Werkstoff bedeckt ist.

Dabei kann vorzugsweise der farbig transparente oder farbig durchscheinende Werkstoff ein eingefärbtes Epoxiharz sein.

Vorzugsweise ist die Farbe der Lichtquelle wellenlängenniedriger als die Farbe des gefilterten Lichtanteils. Dadurch kann die visuelle Lichtintensität des Mischlichts gegenüber dem Licht der Lichtquelle erhöht werden.

Die Anzeige und/oder das Anzeigeteil können aus einem transparenten Werkstoff bestehen, wobei die Anzeige eine durchleuchtbare Anzeigetafel und das Anzeigenteil ein Zeiger eines Zeigerinstruments sein können.

Eine weitere Möglichkeit besteht darin, daß die Anzeigetafel eine transmissiv durchleuchtbare Flüssigkristallanzeige ist.

Ausführungsbeispiele der Erfindung sind in der Zeichnung dargestellt.

Es zeigen:
- Fig. 1:: Eine Ansicht einer Anzeige
- Fig. 2:: Einen Querschnitt der Anzeige nach Fig. 1
- Fig. 3:: Eine Seitenansicht eines Zeigers
- Fig. 4:: Ein Diagramm der Intensität über der Wellenlänge
- Fig. 5:: Die Normfarbtafel
- Fig. 6:: Eine perspektivische Ansicht einer Leuchtdiode

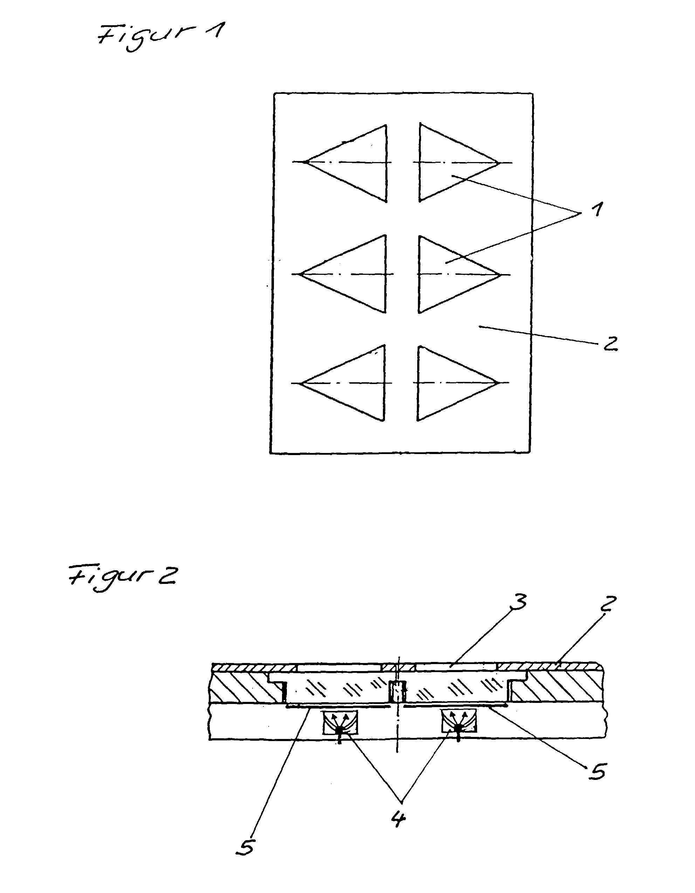

Die in den Figuren 1 und 2 dargestellte Anzeige besitzt 6 Anzeigetafeln 1 aus einem transparenten Werkstoff, die auf einem lichtundurchlässigen Anzeigenfeld 2 angeordnet sind. Auf der Rückseite ist hinter jeder Anzeigetafel 1 eine ein farbiges und zwar blaues Licht erzeugende Leuchtdiode 4 angeordnet.

Zwischen jeder Leuchtdiode 4 und der ihr zugeordneten Anzeigetafel 1 befindet sich ein Farbfilter 5. Der Farbfilter 5 ist ein Fluoreszenzfilter, der ein Teilfilter ist und einen Teil des Lichts der Leuchtdiode 4 ungefiltert und einen weiteren Teil des Lichts der Leuchtdiode absorbiert und bei einer höheren Wellenlänge wieder emittiert.

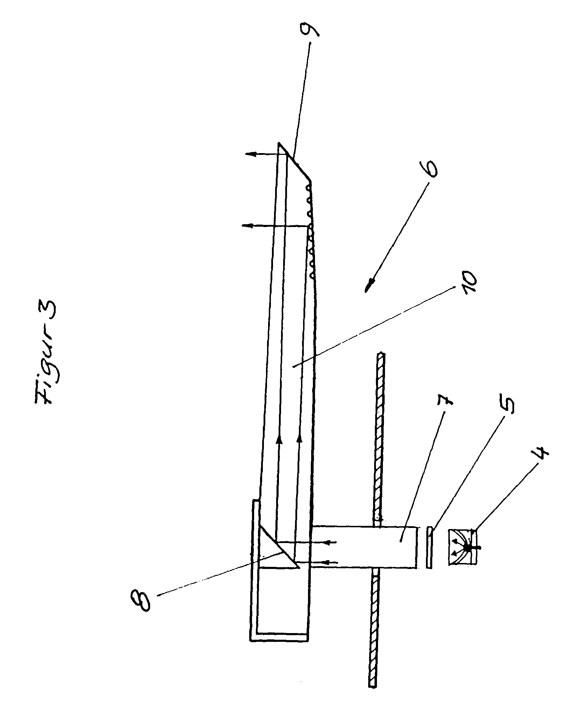

In Fig. 3 ist ein Zeiger 6 eines Zeigerinstruments dargestellt, der aus einem transparenten Werkstoff besteht, der eine ebenfalls aus transparentem Werkstoff bestehende Zeigernabe 7 besitzt, in die ebenfalls über einen Farbfilter 5 Licht einer Leuchtdiode einkoppelbar ist. An einer zur Zeigernabe 7 geneigten Umlenkfläche 8 des Zeigers 6 wird das in die Zeigernabe 7 eingekoppelte Licht zur Zeigerspitze 9 hin in die Zeigerfahne 10 umgelenkt.

An der einem Beobachter abgewandten Fläche der Zeigerfahne 10 erfolgt eine weitere Umlenkung des Lichts zu dem Beobachter hin.

Der Farbfilter 5 und die Leuchtdiode 4 in Fig. 3 sind gleicher Art wie die Farbfilter 5 und Leuchtdioden 4 in den Figuren 1 und 2.

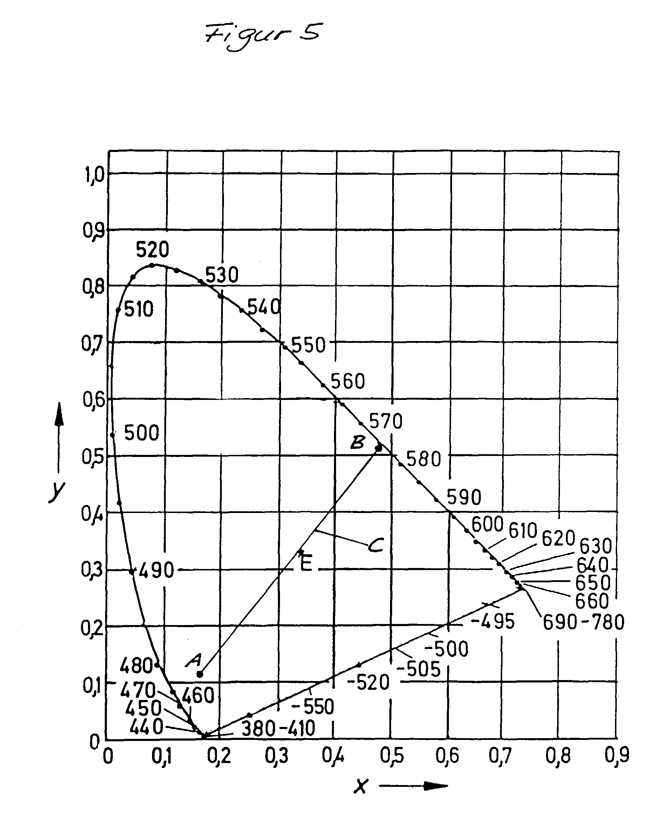

In der Normfarbtafel in Fig. 5 sind die Farbörter der Farbe der Leuchtdiode 4 mit "A" und der Farbe des durch den Farbfilter 5 gefilterten und emittierten Lichtanteils "B" dargestellt sowie durch eine Gerade "C" verbunden. Diese Gerade "C" geht durch den Unbuntpunkt "E" der Normfarbtafel.

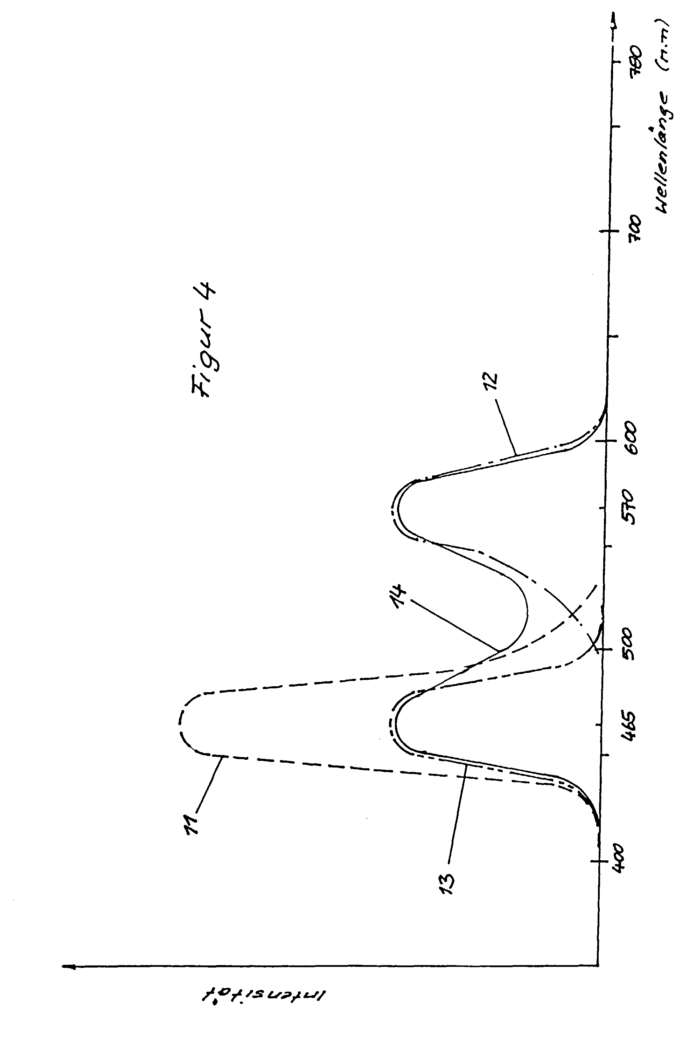

In dem Diagramm der Fig. 4 ist das Spektrum der Farbe der Leuchtdiode 4 (blau) mit unterbrochener Linie 11 und das Spektrum der Farbe das durch den als Fluoreszenzfilter ausgebildeten Farbfilter 5 absorbiert und bei höherer Wellenlänge wieder emittierten Lichtanteils (gelbgrün) mit strichpunktierter Linie 12 dargestellt

Der ungefilterte Anteil des Lichts der Leuchtdiode 4 (blau) ist mit strichdoppelpunktierter Linie 13 dargestellt. Durch die Absorption eines Lichtanteils der Farbe der Leuchtdiode 4 erfolgt eine Reduzierung der Energie und damit der Intensität des verbleibenden nicht absorbierten Lichtanteils der Leuchtdiode 4.

Mit durchgezogener Linie 14 ist das resultierende Spektrum des nicht absorbierten Lichtanteils (Linie 13) und des absorbierten und mit höherer Wellenlänge wieder emittierten Lichtanteils (Linie 12) dargestellt.

Da, wie Fig. 5 zeigt, die Farbörter des nicht absorbierten Lichtanteils "A" und des absorbierten und wieder emittierten Lichtanteils "B" auf unterschiedlichen Seiten des Unbuntpunkts "E" liegen und ihre verbindende Gerade "C" den Unbuntpunkt "E" schneidet, ist die Farbe des resultierenden Spektrums und damit die Beleuchtungsfarbe der Anzeigetafel 1 und des Zeigers 6 weiß.

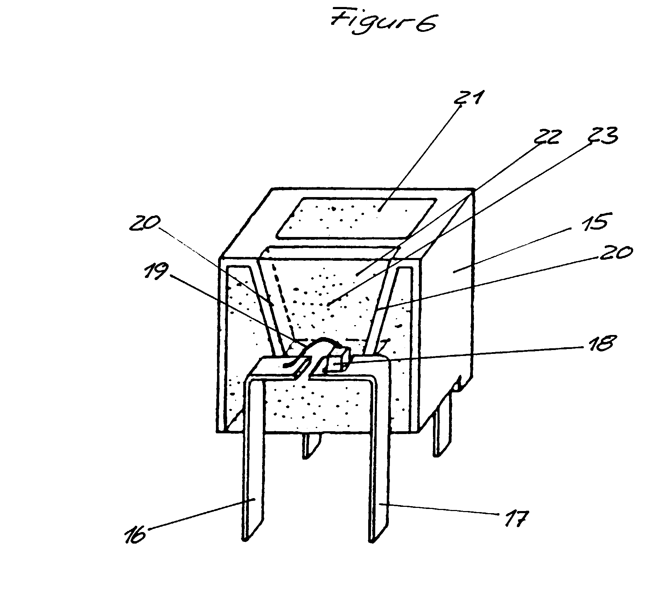

Die in Fig. 6 dargestellte Leuchtdiode besteht aus einem Gehäuse 15, in das von außen parallel zueinander ein Anodenanschluß 16 und ein Kathodenanschluß 17 hineinführen, deren im Gehäuse 15 befindliche Enden einander zugewandt abgebogen sind. Auf dem abgebogenen Ende des Kathodenanschlußes 17 ist ein LED-Chip 18 angeordnet, der mittels eines Kontaktdrahtes 19 leitend mit dem abgebogenen Endes des Anodenanschlußes 16 verbunden ist. Von dem Bereich des LED-Chips 18 ausgehend, sind Reflektorflächen 20 zueinander divergierend bis zu einer beobachterseitigen Öffnung 21 des Gehäuses 15 geführt. Das gesamte Gehäuse ist mit einem Epoxiharz 22 ausgefüllt, das eingemischte farbige Fluoreszenzteilchen 23 enthält und so für das von dem LED-Chip 18 emittierte Licht ein Fluoreszenzfilter bildet.

## Patentansprüche

1. Beleuchtung einer Anzeige und/oder eines Anzeigenteils in einer Beleuchtungsfarbe mit einer durch eine Lichtquelle (4, 18) anderer Farbe als der Beleuchtungsfarbe durchleuchtbaren Anzeige und/oder Anzeigenteil, wobei die Lichtquelle (4, 18) auf der einem Beobachter abgewandten Seite der Anzeige und/oder des Anzeigenteils angeordnet ist und zwischen Lichtquelle (4, 18) und Anzeige und/oder Anzeigenteil ein Fluoreszenzfilter (5, 22) angeordnet ist, welcher einen Teil des Lichts der Lichtquelle (4, 18) absorbiert und bei einer höheren Wellenlänge emittiert, **dadurch gekennzeichnet**, daß die Lichtquelle eine einen LED-Chip (18) aufweisende Leuchtdiode ist, daß der LED-Chip (18) mit einer Beschichtung aus Epoxiharz (22), das eingemischte Fuoreszenzteilchen (23) enthält, bedeckt ist, welches für das von dem LED-Chip (18) emittierte Licht den Fluoreszenzfilter bildet, und daß der Fluoreszenzfilter ein Teilfilter ist, durch den ein weiterer Teil des Lichtes des LED-Chips (18) ungefiltert hindurchtretbar ist.

2. Beleuchtung nach Anspruch 1, **dadurch gekennzeichnet**, daß in der Normfarbtafel die Farbörter (A, B) der Farbe der Lichtquelle und der Farbe des gefilterten Lichtanteils auf entgegengesetzten Seiten zum Unbuntpunkt (E) auf einer etwa geradlinigen, den Unbuntbereich schneidenden Verbindung (C) liegen.

3. Beleuchtung nach einem der vorhergehenden Ansprüche, **dadurch gekennzeichnet**, daß die Lichtquelle eine SMD-Leuchtdiode ist.

4. Beleuchtung nach einem der vorhergehenden Ansprüche, **dadurch gekennzeichnet,** daß die Leuchtdiode ein in einem Gehäuse (15) angeordneter LED-Chip (18) ist, wobei der LED-Chip (18) zur Beobachterseite hin von einem den Farbfilter bildendenden farbig transparenten oder farbig durchscheinenden Werkstoff bedeckt ist.

5. Beleuchtung nach Anspruch 4, **dadurch gekennzeichnet**, daß der farbig transparente oder farbig durchscheinende Werkstoff ein eingefärbter Epoxiharz (22) ist.

6. Beleuchtung nach einem der vorhergehenden Ansprüche, **dadurch gekennzeichnet**, daß die Farbe der Lichtquelle wellenlängenniedriger ist als die Farbe des gefilterten und emittierten Lichtanteils.

7. Beleuchtung nach einem der vorhergehenden Ansprüche, **dadurch gekennzeichnet**, daß die Anzeige und/oder das Anzeigenteil aus einem transparenten Werkstoff besteht.

8. Beleuchtung nach einem der vorhergehenden Ansprüche, **dadurch gekennzeichnet**, daß die Anzeige eine durchleuchtbare Anzeigetafel (1) ist.

9. Beleuchtung nach einem der Ansprüche 1 bis 7, **dadurch gekennzeichnet**, daß das Anzeigenteil ein Zeiger (6) eines Zeigerinstruments ist.

10. Beleuchtung nach Anspruch 8, **dadurch gekennzeichnet**, daß die Anzeigetafel eine transmissiv durchleuchtbare Flüssigkristallanzeige ist.

## Claims

1. Illumination of a display and/or of a display part in an illumination colour with a display and/or display part that can be transilluminated by a light source (4, 18) of a colour other than the illumination colour, the light source (4, 18) being arranged on that side of the display and/or of the display part which is remote from an observer, and a fluorescent filter (5, 22) being arranged between the light source (4, 18) and the display and/or display part, which filter absorbs a portion of the light from the light source (4, 18) and emits it at a higher wavelength, **characterized** in that the light source is a light-emitting diode having an LED chip (18), in that the LED chip (18) is covered with a coating made of epoxy resin (22) containing fluorescent particles (23) mixed in, which forms the fluorescence filter for the light emitted by the LED chip (18), and in that the fluorescence filter is a partial filter through which a further portion of the light from the LED chip (18) can pass unfiltered.

2. Illumination according to Claim 1, **characterized** in that, in the standard chromaticity diagram, the colour loci (A, B) of the colour of the light source and of the colour of the filtered light component lie on opposite sides relative to the achromatic point (E) on an approximately rectilinear link (C) which intersects the achromatic region.

3. Illumination according to one of the preceding claims, **characterized** in that the light source is an SMD light-emitting diode.

4. Illumination according to one of the preceding claims, **characterized** in that the light-emitting diode is an LED chip (18) arranged in a housing (15), the LED chip (18) being covered, towards the observer's side, by a coloured-transparent or colour-translucent material which forms the colour filter.

5. Illumination according to Claim 4, **characterized** in that the coloured-transparent or coloured-translucent material is a dyed epoxy resin (22).

6. Illumination according to one of the preceding claims, **characterized** in that the colour of the light source has a smaller wavelength than the colour of the filtered and emitted light component.

7. Illumination according to one of the preceding claims, **characterized** in that the display and/or the display part are/is composed of a transparent material.

8. Illumination according to one of the preceding claims, **characterized** in that the display is a display panel (1) that can be transilluminated.

9. Illumination according to one of Claims 1 to 7, **characterized** in that the display part is a pointer (6) of a pointer-type instrument.

10. Illumination according to Claim 8, **characterized** in that the display panel is a liquid-crystal display that can be transilluminated transmissively.

## Revendications

1. Dispositif d'illumination d'un dispositif d'affichage et/ou d'une partie d'un dispositif d'affichage dans une couleur d'illumination avec un dispositif d'affichage et/ou une partie d'un dispositif d'affichage pouvant être illuminé par transparence par une source de lumière (4, 18) d'une couleur différente de la couleur d'illumination, la source de lumière (4, 18) étant disposée du côté du dispositif d'affichage et/ou de la partie du dispositif d'affichage opposé à un observateur et un filtre fluorescent (5, 22) étant disposé entre la source de lumière (4, 18) et le dispositif d'affichage et/ou la partie du dispositif d'affichage, lequel absorbe une partie de la lumière de la source de lumière (4, 18) et émet à une longueur d'onde supérieure, caractérisé par le fait que la source de lumière est une diode électroluminescente qui présente un microcircuit LED (18), que le microcircuit LED (18) est recouvert d'un revêtement en résine époxy (22) qui contient des particules fluorescentes (23) intégrées et qui forme le filtre fluorescent pour la lumière émise par le microcircuit LED (18) et que le filtre fluorescent est un filtre partiel au travers duquel une autre partie de la lumière du microcircuit LED (18) peut passer sans être filtrée.

2. Dispositif d'illumination selon la revendication 1, caractérisé par le fait que les emplacements (A, B) de la couleur de la source de lumière et la couleur de la partie filtrée de la lumière se trouvent dans le diagramme chromatique sur des côtés opposés du point achromatique (E) sur une courbe (C) pratiquement rectiligne qui coupe le point achromatique.

3. Dispositif d'illumination selon l'une des revendications précédentes, caractérisé par le fait que la source de lumière est une diode électroluminescente CMS.

4. Dispositif d'illumination selon l'une des revendications précédentes, caractérisé par le fait que la diode électroluminescente est un microcircuit LED (18) disposé dans un boîtier (15), le microcircuit LED (18) étant recouvert du côté de l'observateur par un matériau transparent à la couleur ou translucide à la couleur qui forme le filtre de couleur.

5. Dispositif d'illumination selon la revendication 4, caractérisé par le fait que le matériau transparent à la couleur ou translucide à la couleur est une résine époxy colorée (22).

6. Dispositif d'illumination selon l'une des revendications précédentes, caractérisé par le fait que la couleur de la source de lumière a une longueur d'onde inférieure à celle de la couleur de la partie filtrée et émise de la lumière.

7. Dispositif d'illumination selon l'une des revendications précédentes, caractérisé par le fait que le dispositif d'affichage et/ou la partie du dispositif d'affichage sont/est réalisés dans un matériau transparent.

8. Dispositif d'illumination selon l'une des revendications précédentes, caractérisé par le fait que le dispositif d'affichage est un tableau d'affichage (1) qui peut être illuminé par transparence.

9. Dispositif d'illumination selon l'une des revendications 1 à 7, caractérisé par le fait que la partie du dispositif d'affichage est l'aiguille (6) d'un instrument à aiguille.

10. Dispositif d'illumination selon la revendication 8, caractérisé par le fait que le tableau d'affichage est un dispositif d'affichage à cristaux liquides qui peut être illuminé par transparence par transmission.
